# EUROPEAN PATENT APPLICATION

(11) **EP 2 023 237 A1**
(43) Date of publication of application: **11.02.2009**
(21) Application number: 07720925.2
(22) Date of filing: 23.04.2007
(51) Int. Cl.: G06F 3/14

(54) **POSITION INDICATING METHOD AND POSITION INDICATING APPARATUS**

(30) Priority: 21.04.2006 CN 200610046372
(71) Applicant: Qiu, Bo, Wuxi Jiangsu 214028 (CN)
(72) Inventor: Qui, Bo, Wuxi, Jiangsu 214028 (CN); Li, Zhao, Shenyang, Liaoning 110004 (CN); QUI, Guangiun, Shenyang, Liaoning 110004 (CN)
(74) Representative: Garratt, Peter Douglas
(86) International application number: PCT/CN2007/001352
(87) International publication number: WO 2007/121680

(57) **Abstract**

A position indicating method, comprising: determining an output unit to be outputted; outputting content within a provided output space, wherein the content outputted within the provided output space is the current output content; and mapping the current output content to a position indicating window according to a predetermined method when the to-be-occupied output space of the output unit to be outputted is larger than the provided output space, and representing the current output content by an indicating mark, wherein the relative position of the indicating mark within the position indicating window reflects the relative position of the current output content in the output unit to be outputted. A position indicating apparatus, comprising: a judgment unit, a position indicating process unit and a position indicating display unit. Through the position indicating window in which the relative position of the indicating mark reflects the relative position of the current output content in the output unit to be outputted, thereby reflecting the relative position of the current output content in the output unit to be outputted as a whole can be realized.

## Description

### Field of the Invention

The present invention relates to a position indicating method and a position indicating apparatus in the field of computer or information output technology.

### Background of the Invention

In the recent decades, more and more Windows and related applications of information output methods have emerged in the field of information technology, especially in the computer and telecommunication industries. Although computer displays are growing larger than ever before, people still wish to have even larger displays or have larger display areas by fully utilizing the display utilities, particularly with the displays of various man-machine interaction apparatuses and digital-electronic apparatuses, such as desktop computers, laptop computers, handhold computers, mobile phones, Personal Digital Assistant (PDA), Personal Information Manager (PIM), tablet PC, written whiteboards and electronic whiteboards.

In the conventional technology, horizontal and vertical scrollbars are adopted to indicate the position relationship between the current content displayed in a window and the display unit to be displayed, and such indicating method has the following disadvantages:
(1) when horizontal and vertical scrollbars are adopted to indicate the relative position of the current content in a window in relation to the display unit to be displayed, the position of the current content displayed in relation to the whole display unit to be displayed cannot be seen;
(2) normally, four steps are needed to reach a target area by moving the horizontal and vertical scrollbars respectively, i.e., it is slow, inaccurate and inconvenient to change the display position, resulting in slowness in positioning the content to be displayed; and
(3) the conventional art cannot provide free two-dimension movement of or free choice of the position to be displayed.

Along with the development of related technologies and the wide applications of small electronic products such as handhold computers and mobile phones, the method for providing largest display area in a small display window and effectively changing and moving the current content displayed has become one of the important research projects in the present Windows technology research.

When a relatively large graphic shall be printed while the printer of the user can only print a smaller graphic or on smaller paper, the following problems may emerge:
(1) when horizontal and vertical scrollbars are adopted to indicate the relative position of the present content in a window in relation to the print unit to be printed, the position of the present content printed in relation to the whole print unit to be printed cannot be seen;
(2) normally, four steps are needed to reach a target area by moving the horizontal and vertical scrollbars respectively, i.e., it is slow, inaccurate and inconvenient to change the print position, resulting in slowness in positioning the content to be printed; and
(3) the conventional art cannot provide free two-dimension movement of or free choice of the position to be printed.

When the cache unit to be cached is large while the cache is limited, similar problem may also emerge.

To sum up, when the output unit to be output is large while the provided output space is limited, the above disadvantages or problems may emerge.

### Summary of the Invention

The objective of the present invention is to provide a position indicating method to reflect the relative position of the current output content relative to the output unit to be outputted as a whole.

To attain the above objective, the present invention provides a position indicating method, including: determining the output unit to be outputted, outputting content within the provided output space, wherein the content outputted within the provided output space is the current output content; when the to-be-occupied output space of the output unit to be outputted is larger than the provided output space, mapping the current output content to a position indicating window according to a predetermined method, and representing the current output content by an indicating mark, wherein the relative position of the indicating mark within the position indicating window reflects the relative position of the current output content in the output unit to be outputted.

To attain the above objective, the present invention also provides a position indicating apparatus, including: a judgment unit, position indicating process unit and position indicating display unit; wherein the judgment unit is adapted to judge whether the to-be-occupied output space of the output unit to be outputted is larger than the provided output space and to invoke the position indicating process unit when the to-be-occupied output space of the output unit to be outputted is larger than the provided output space; the position indicating process unit is connected to the judgment unit and is adapted to map the current output content from the provided output space to the position indicating display unit according to a predetermined method and to represent the current output content with an indicating mark; and the position indicating display unit is connected to the position indicating process unit and is adapted to output a position indicating window in which the relative position of the indicating mark reflects the relative position of the current output content in the output unit to be outputted.

It can be seen from the above technical scheme that the present invention has the following advantage against the conventional art: by mapping the current output content to the position indicating window according to the predetermined method and representing the current output content by the indicating mark, the present invention enables the relative position of the indicating mark within the position indicating window to reflect the relative position of the current output content within the output unit to be outputted, thereby reflecting the relative position of the current output content relative to the output unit to be outputted as a whole can be realized.

### Brief Description of the Drawings

Figure 1 is a flowchart of the position indicating method in accordance with the present invention;
Figure 2 is a flowchart of the position indicating method when the content is outputted to a display;
Figure 3A is shape schematic 1 of the position indicating window in accordance with the present invention;
Figure 3B is shape schematic 2 of the position indicating window in accordance with the present invention;
Figure 3C is shape schematic 3 of the position indicating window in accordance with the present invention;
Figure 3D is shape schematic 4 of the position indicating window in accordance with the present invention;
Figure 3E is shape schematic 5 of the position indicating window in accordance with the present invention;
Figure 3F is shape schematic 6 of the position indicating window in accordance with the present invention;
Figure 3G is shape schematic 7 of the position indicating window in accordance with the present invention;
Figure 3H is shape schematic 8 of the position indicating window in accordance with the present invention;
Figure 4 is a structure schematic of Embodiment 1 of the position indicating apparatus in accordance with the present invention;
Figure 5 is a structure schematic of Embodiment 2 of the position indicating apparatus in accordance with the present invention; and
Figure 6 is a structure schematic of Embodiment 3 of the position indicating apparatus in accordance with the present invention.

### Detailed Description of Embodiments of the Invention

A description of the technical scheme in accordance with the present invention is further described in detail with reference to the attached drawings and embodiments.

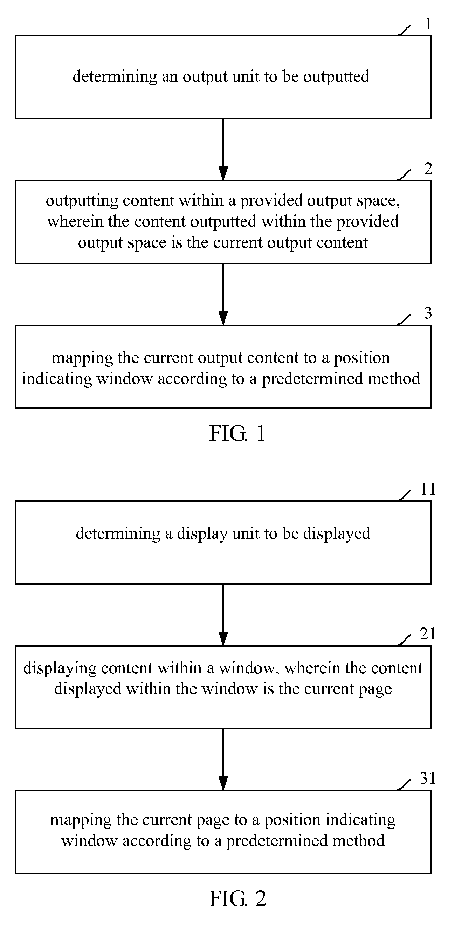

Figure 1 is a flowchart of the position indicating method in accordance with the present invention, including:
Step 1: determining the output unit to be outputted;
Step 2: outputting content within a provided output space, wherein the content outputted within the provided output space is the current output content;
Step 3: mapping the current output content to a position indicating window according to a predetermined method when the to-be-occupied output space of the output unit to be outputted is larger than the provided output space, and representing the current output content by an indicating mark, wherein the relative position of the indicating mark within the position indicating window reflects the relative position of the current output content in the output unit to be outputted.

In this embodiment, the current output content is mapped to the position indicating window according to the predetermined method and represented by the indicating mark, hence the relative position of the indicating mark within the position indicating window can reflect the relative position of the current output content within the output unit to be outputted, and reflecting the relative position of the current output content relative to the output unit to be outputted as a whole can be realized.

When the current output content is changed, the relative position of the indicating mark in the position indicating window shall be changed accordingly in accordance with the predetermined method.

When the current output content shall be outputted to a display, the current output content in the window can be dragged and the new output content shown shall be the current output content and the relative position of the indicating mark representing the current output content mapped in the position indicating window shall also be changed accordingly in accordance with the predetermined method.

When the current output content shall be outputted to a printer, after the current printing job is finished or cancelled, the new printing job shall be the current print content and the relative position of the indicating mark representing the current print content mapped in the position indicating window shall also be changed accordingly in accordance with the predetermined method.

When the current output content shall be outputted to a cache, after the current cache job is cancelled or ceased, the new cache job shall be the current cache content and the relative position of the indicating mark representing the current cache content mapped in the position indicating window shall also be changed accordingly in accordance with the predetermined method.

In this embodiment, when the whole output unit to be outputted is moved or the current output content is changed, the relative position of the indicating mark in the position indicating window shall be changed accordingly in accordance with the predetermined method. By observing the position indicating window, a user can quickly learn the position of the current output content relative to the output unit to be outputted as a whole.

When the indicating mark is moved and the position of the indicating mark in the position indicating window is changed, corresponding content shall be chosen according to the predetermined method from the output unit to be outputted and shall be outputted within the provided output space.

When the content shall be outputted to a display upon moving the indicating mark in the position indicating window, as soon as the position of the indicating mark in the position indicating window is changed, corresponding content shall be chosen according to the predetermined method from the display unit to be displayed and shall be displayed within the current window.

When the content shall be outputted to a printer upon moving the indicating mark in the position indicating window, as soon as the position of the indicating mark in the position indicating window is changed, corresponding content shall be chosen according to the predetermined method from the print unit to be printed and shall be printed as the output.

When the content shall be outputted to a cache upon moving the indicating mark in the position indicating window, as soon as the position of the indicating mark in the position indicating window is changed, corresponding content shall be chosen according to the predetermined method from the cache unit to be cached and shall be outputted to the cache.

In this embodiment, the current output content can be changed quickly by moving the indicating mark in the position indicating window. Compared with the conventional art which requires moving the horizontal and vertical scrollbars respectively to change the current output content, the present invention requires only one step to reach the target area, i.e., the present invention is quick, accurate and convenient in changing the current display position and is quick in positioning the content to be outputted, thereby the output content can be moved freely in two dimensions and can be chosen freely.

The output described above includes but is not limited to displaying, printing and caching; those skilled in the art should understand that all that are involved in information or data traffic and process shall be covered by the protection scope of the present invention.

The following embodiment illustrates, by outputting content to a display, the workflow and work procedure of the position indicating method in accordance with the present invention.

Figure 2 is a flowchart of the position indicating method when the content is outputted to a display, and the workflow includes:
Step 11: determining the display unit to be displayed;
Step 21: outputting content within a window, wherein the content displayed within the window is the current page, and the window can be any type of software or hardware display screen, such as the screen of a television set, the screen of a display, or the window of a display software application;
Step 31: mapping the current page to a position indicating window according to a predetermined method when the to-be-occupied display space of the display unit to be displayed is larger than the space of the window, and representing the current page by an indicating mark, wherein the relative position of the indicating mark within the position indicating window reflects the relative position of the current page in the display unit to be displayed.

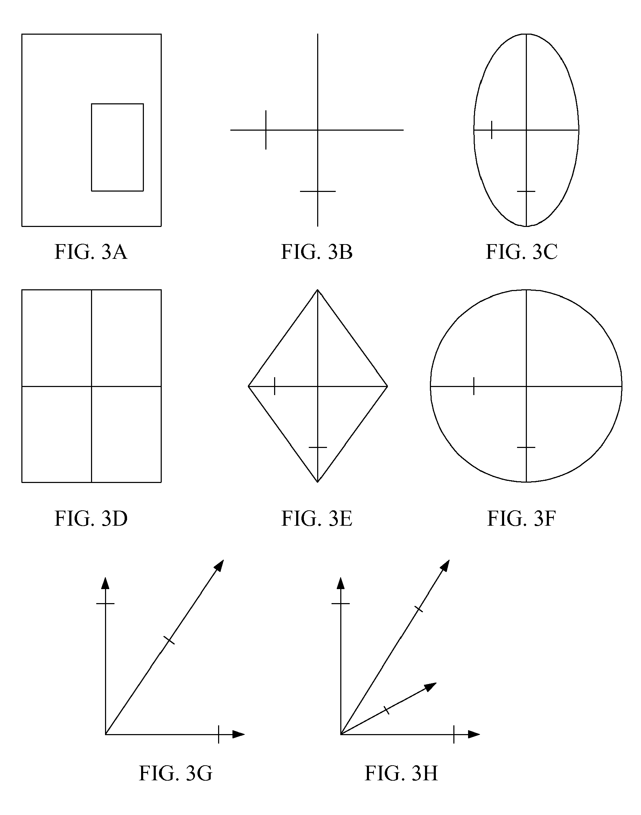

In this embodiment, the position of the current page in the whole document can be represented with the position indicating window shown in Figures 3A-3F and the indicating mark in the position indicating window. The position indicating window (or called a display icon, an assistance tool or a virtual device) can be of any shape, e.g., rectangle, square, hexagon, ellipse, circle, or any combination of these shape; the application of different colors will make the display more convenient and the shape vivider.

The indicating mark may be in any shape, including but not limited to rectangle, circle or line. The relative position of the indicating mark in the position indicating window reflects the position of the current page relative to the document as a whole. As shown in Figure 3A, the small rectangle indicates the current page displayed in the view area and the large rectangle indicates the whole document to be displayed. When the whole document or the current page displayed is moved, the relative position of the small rectangle in the large rectangle shall move accordingly to indicate the two-dimensional, horizontal and vertical, changes of the position of the current page in the whole document; on the other hand, when a user changes the position of the small rectangle by dragging the small rectangle with a hand, a mouse, a pen or any other input means, the display of the current page will be changed accordingly in proportion (or according to a specific function F (X, Y) = f (x, y)). In Figure 3B, 3C, 3E, 3G or 3H, a long horizontal line in a cross indicates the width of the document and a long vertical line in the cross indicates the length of the document, and a short line intersecting the cross (e.g., a short horizontal line or a short vertical line) indicates the relative horizontal or X-axis (or vertical or Y-axis) position of the current page displayed. When the whole document or the displayed part of the document is moved, the relative position of the short lines intersecting the cross shall move accordingly to indicate the horizontal and vertical changes of the position of the current page in the whole document; on the other hand, when a user changes the position of the small rectangle by dragging the short horizontal/vertical line intersecting the cross with a hand, a mouse, a pen or any other input means, the display of the current page will be changed accordingly in proportion (or according to a specific function F (X, Y) = f (x, y)). In Figure 3D, the horizontal (or vertical) line of the cross indicates the relative horizontal or X-axis (or vertical or Y-axis) position of the current page displayed in the view area, basically the same as in the drawing shown in Figure 3B. The position of the currently displayed part in the whole page to be displayed can thus be shown accurately and conveniently, which also makes the operation on the page accurate and convenient. As a movement can be made in both horizontal and vertical directions at the same time, therefore one movement equals four movements in the conventional art (1, move to a scrollbar; 2, move the scrollbar; 3, move to the other scrollbar; 4, move the other scrollbar) and speed of the operation is increased four times. The position indicating window and the current page displayed in the view area are designed to overlap one another, and the position indicating window is placed as an opaque layer on top of the current page displayed in the view area. When a user needs to watch the graphic or text covered by the position indicating window, the user can drag the position indicating window. The position indicating window can also be a transparent or translucent layer, e.g., a layer of 70% transparency, on top of or at the bottom of the current page displayed in the view area, hence all of the page can be shown regardless of the position indicating window and a user no longer needs to drag the position indicating window to watch the graphic or text covered by the position indicating window. The edges of the large and small rectangles in Figure 3A can be set to be of the same or different transparency level relative to the current page displayed in the view area, or the color filling the large or the small rectangle can be set to be of the same or different transparency level relative to the current page displayed in the view area, therefore the user will be able to distinguish the large rectangle and the small rectangle. The drawings in Figures 3B-3F consist of lines which can be set to be translucent, including 70% transparent, to save more display space than the conventional scrollbars do.

Among Figures 3A-3F, the display pattern in Figure 3A is the most direct and convenient, and is better than the conventional method of using scrollbars in that the user can be provided with maximum display space, hence such method is suitable for handhold computers and mobile phones. The display pattern shown in Figure 3B is also simple while the display patterns in Figures 3C-3E are also good choices. Figure 3F is a special case of the method of Figure 3C. The display patterns in Figures 3B, 3G and 3H are suitable for graphic display, the display pattern of Figure 3A is suitable for text display and the display pattern of Figure 3B is suitable for mobile phone display.

The preceding description describes two-dimensional display patterns, however, in virtual space or spherical surface display, multi-dimensional display patterns may be needed, and Figures 3G and 3H show three-dimensional and four-dimensional display patterns respectively, in which the way of indicating the position of the current display content in the view area relative to the content to be displayed as a whole is similar to the way shown in Figure 3B.

The graphics shown in the figures can be set between transparent and opaque; when the graphics are transparent, those under the graphics will be completely visible. Since only the part to be displayed is displayed and the indicating graphic is hidden, the display space can be larger and the space can be fully utilized base on more accurate, faster and more convenient indicating tool that has almost all the functions of a mouse. The technical scheme can be applied to all related display applications in the field of IT and automatic mechanics, and is even more suitable for devices with small display space, such as mobile phones, PDA and PIM.

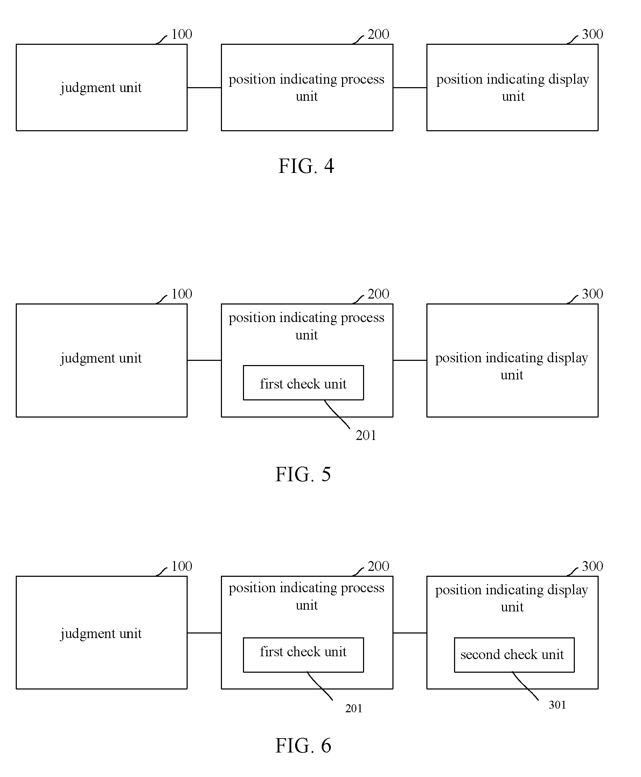

Figure 4 is a structure schematic of Embodiment 1 of the position indicating apparatus in accordance with the present invention, including: a judgment unit 100, a position indicating process unit 200 and a position indicating display unit 300; wherein the judgment unit 100 is adapted to judge whether the to-be-occupied output space of the output unit to be outputted is larger than the provided output space and to invoke the position indicating process unit 200 when the to-be-occupied output space of the output unit to be outputted is larger than the provided output space; the position indicating process unit 200 is connected to the judgment unit 100 and is adapted to map the current output content from the provided output space to the position indicating display unit 300 according to a predetermined method and to represent the current output content with an indicating mark; and the position indicating display unit 300 is connected to the position indicating process unit 200 and is adapted to output a position indicating window in which the relative position of the indicating mark reflects the relative position of the current output content in the output unit to be outputted.

Figure 5 is a structure schematic of Embodiment 2 of the position indicating apparatus in accordance with the present invention. This embodiment is different from the preceding embodiment in that the position indicating process unit 200 further includes a first check unit 201 adapted to check whether the current output content outputted within the provided output space changes, and to map the current output content from the provided output space to the position indicating display unit 300 again according to a predetermined method and represent the current output content with an indicating mark when the current output content outputted within the provided output space changes.

Figure 6 is a structure schematic of Embodiment 3 of the position indicating apparatus in accordance with the present invention. This embodiment is different from the preceding embodiment in that the position indicating display unit 300 further includes a second check unit 301 adapted to check whether the position of the indicating mark in the position indicating window changes, to choose corresponding content from the output unit to be outputted when the position of the indicating mark in the position indicating window changes, and to output the corresponding content within the provided output space.

It should be noted that the foregoing embodiments of the present invention only illustrate the technical scheme of the present invention and are not used for limiting the protection scope thereof. Though a detailed description of the present invention is given with reference to the preferred embodiments, it should be understood by those skilled in the art that any modification or equivalent substitution made without departing from the spirit of the present invention should be covered by the protection scope of the present invention.

## Claims

1. A position indicating method, comprising:
determining an output unit to be outputted;
outputting content within a provided output space, wherein the content outputted within the provided output space is the current output content; and
mapping the current output content to a position indicating window according to a predetermined method when the to-be-occupied output space of the output unit to be outputted is larger than the provided output space, and representing the current output content by an indicating mark, wherein the relative position of the indicating mark within the position indicating window reflects the relative position of the current output content in the output unit to be outputted.

2. The method according to Claim 1, further comprising:
changing the relative position of the indicating mark in the position indicating window in accordance with the predetermined method when the current output content is changed.

3. The method according to Claim 1, further comprising:
choosing corresponding content according to the predetermined method from the output unit to be outputted when the indicating mark is moved and the position of the indicating mark in the position indicating window is changed; and
outputting the chosen content within the provided output space.

4. The method according to Claim 1, wherein, when the content is outputted to a display,
the determining an output unit to be outputted comprises determining an display unit to be displayed;
the outputting content within a provided output space comprises displaying content in a window and the content displayed in the window is the current page; and
the current page is mapped to the position indicating window according to the predetermined method when the to-be-occupied display space of the display unit to be displayed is larger than the space of the window, and the current page is represented by the indicating mark, wherein the relative position of the indicating mark within the position indicating window reflects the relative position of the current page in the display unit to be displayed.

5. The method according to Claim 4, further comprising:
changing the relative position of the indicating mark in the position indicating window in accordance with the predetermined method when the current page or the output unit to be outputted is moved and the current page is changed.

6. The method according to Claim 4, further comprising:
choosing corresponding content according to the predetermined method from the display unit to be displayed when the indicating mark is moved and the position of the indicating mark in the position indicating window is changed; and
displaying the chosen content within the window.

7. The method according to Claim 1, wherein, when the content is outputted to a printer,
the determining an output unit to be outputted comprises determining a print unit to be printed;
the outputting content within a provided output space comprises printing content in a print head and the content printed in the print head is the current print page; and
the current print page is mapped to the position indicating window according to the predetermined method when the to-be-occupied print space of the print unit to be printed is larger than a provided print space, and the current print page is represented by the indicating mark, wherein the relative position of the indicating mark within the position indicating window reflects the relative position of the current print page in the print unit to be printed.

8. The method according to Claim 1, wherein, when the content is outputted to a cache,
the determining an output unit to be outputted comprises determining a cache unit to be cached;
the outputting content within a provided output space comprises caching content in a storage and the content cached in the storage is the current cache content; and
the current cache content is mapped to the position indicating window according to the predetermined method when the to-be-occupied cache space of the cache unit to be cached is larger than a provided cache space, and the current cache content is represented by the indicating mark, wherein the relative position of the indicating mark within the position indicating window reflects the relative position of the current cache content in the cache unit to be cached.

9. The method according to any of Claims 1-8, wherein, the position indicating window or the indicating mark is in any shape, comprising but not limited to: square, rectangle, hexagon, polygon, polygon with curving edges, ellipse, circle, any other shape or any combination of the preceding shapes, or in any element comprising one or any combination of the followings: line, plane, solid, color, or in any display pattern comprising one or any combination of the followings: brightness, grayscale, contrast and transparency.

10. A position indicating apparatus, comprising: a judgment unit, a position indicating process unit and a position indicating display unit, wherein
the judgment unit is adapted to judge whether the to-be-occupied output space of an output unit to be outputted is larger than a provided output space or storage space, and to invoke the position indicating process unit when the to-be-occupied output space of the output unit to be outputted is larger than the provided output space;
the position indicating process unit is connected to the judgment unit and is adapted to map the current output content from the provided output space to the position indicating display unit according to a predetermined method and to represent the current output content with an indicating mark; and
the position indicating display unit is connected to the position indicating process unit and adapted to output a position indicating window in which the relative position of the indicating mark reflects the relative position of the current output content in the output unit to be outputted.

11. The apparatus according to Claim 10, wherein the position indicating process unit further comprises a first check unit, adapted to check whether the current output content outputted within the provided output space changes, and to map the current output content from the provided output space to the position indicating display unit again according to a predetermined method and represent the current output content with an indicating mark when the current output content outputted within the provided output space changes.

12. The apparatus according to Claim 10 or 11, wherein the position indicating display unit further comprises a second check unit, adapted to check whether the position of the indicating mark in the position indicating window changes, to choose corresponding content from the output unit to be outputted when the position of the indicating mark in the position indicating window changes, and to output the corresponding content within the provided output space.
